**Europäisches Patentamt**

**European Patent Office**

**Office européen des brevets**

(11) Veröffentlichungsnummer: **0 505 703 A1**

# (12) EUROPÄISCHE PATENTANMELDUNG

(21) Anmeldenummer: **92102036.8**

(22) Anmeldetag: **07.02.92**

(51) Int. Cl.⁵: **H02K 7/102**, H02K 7/12, H02P 3/04, F16D 66/02

(30) Priorität: **05.03.91 DE 4106897**

(43) Veröffentlichungstag der Anmeldung:
**30.09.92 Patentblatt 92/40**

(84) Benannte Vertragsstaaten:
**AT DE FR GB IT**

(71) Anmelder: **Licentia Patent-Verwaltungs-GmbH**
**Theodor-Stern-Kai 1**
**W-6000 Frankfurt/Main 70(DE)**

(72) Erfinder: **Hauke, Dieter**
**Moorbäksweg 7**
**W-2906 Wardenburg(DE)**
Erfinder: **Patzelt, Siegfried**
**Dwaschweg 43**
**W-2900 Oldenburg(DE)**

(74) Vertreter: **Vogl, Leo, Dipl.-Ing.**
**Licentia Patent-Verwaltungs-G.m.b.H.**
**Theodor-Stern-Kai 1**
**W-6000 Frankfurt 70(DE)**

(54) Elekfromotor mit selbsttätig wirkender Bremse.

㊼ Bekannte Elektromotoren mit beim Abschalten des Motors selbsttätig wirkender Bremse, wobei die Bremse einen ferromagnetischen, die Motorwelle zwischen Läuferblechpaket und Lagerschild umgebenden Anker aufweist, der von dem in den Läufer eindringenden magnetischen Fluß des Motors axial entgegen einer Federkraft an den Läufer anziehbar ist, weisen insofern eine Unzulänglichkeit auf, als die Verschleißgrenze des Bremsbelags nicht ohne weiteres erkennbar ist. Daher besteht die Gefahr einer mechanischen Beschädigung der Bremseinrichtung. Die neue Einrichtung schließt diese Gefahr aus.

In der Bremsscheibe (16) ist ein Betätigungsglied (29) gehalten, das einen bis an die Verschleißgrenze des Bremsbelags (19) reichenden Abschleifkopf (29') aufweist. Auf das Betätigungsglied (29) wirkt der unter Federdruck stehende Stößel (30') eines Schalters (30) ein. Infolge Abriebs des Abschleifkopfes (29') beim Erreichen der Verschleißgrenze (31) löst sich das Betätigungsglied (29) selbsttätig von der Bremsscheibe (16), wobei der Schalter (30) anspricht und einen Schaltvorgang auslöst.

FIG.1

Die Erfindung bezieht sich auf einen Elektromotor gemäß dem Oberbegriff des Anspruchs 1.

Ein derartiger Elektromotor ist Gegenstand der nicht vorveröffentlichten Patentanmeldung P 39 35 968.9-32.

Eine gewisse Unzulänglichkeit eines solchen Elektromotors besteht darin, daß nicht ohne weiteres erkennbar ist, wenn die Verschleißgrenze des Bremsbelags der Bremsscheibe erreicht ist, so daß mechanische Beschädigungen der Bremseinrichtung nicht auszuschließen sind.

Der Erfindung liegt die Aufgabe zugrunde, das Überwachungspersonal rechtzeitig auf den Verschleißzustand des Bremsbelags aufmerksam zu machen bzw. ein selbsttätiges Abschalten des Motors beim Erreichen der Verschleißgrenze der Bremseinrichtung zu bewirken.

Diese Aufgabe ist erfindungsgemäß mit den kennzeichnenden Merkmalen des Anspruchs 1 gelöst.

Weiterbildungen und zweckmäßige Ausgestaltungen der Erfindung sind in den Unteransprüchen charakterisiert.

Die Erfindung wird im nachstehenden anhand der Zeichnung erläutert.

Es zeigen:

Fig. 1    eine Ansicht des bremsseitigen Teils eines Asynchronmotors im Schnitt,

Fig. 2    eine Ansicht entlang des Schnittes A-A durch Fig. 1,

Fig. 3    die mechanische Verbindung eines Betätigungsglieds mit der Bremsscheibe.

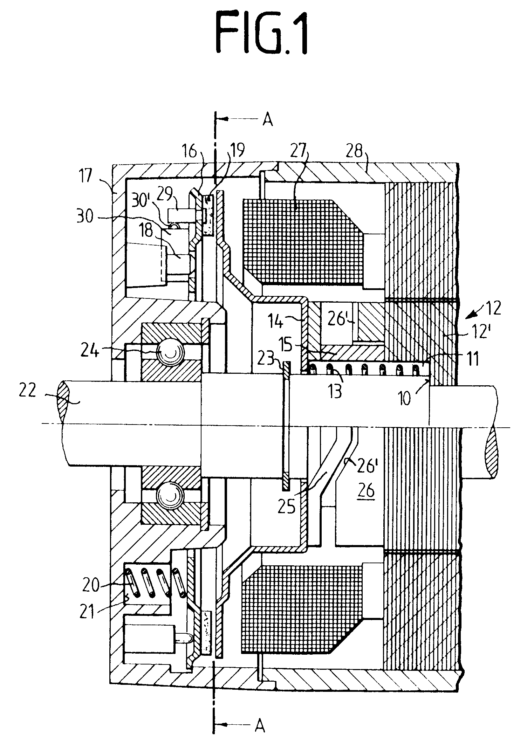

Wie Figur 1 erkennen läßt, stützt sich am Grund 10 einer Ausdrehung 11 im Blechpaket 12' des Kurzschlußläufers 12 eine Schraubenfeder 13 ab, die mit ihrem anderen Ende auf einen Bremstopf 14 einwirkt, mit dem ein Magnetanker 15 fest verbunden ist, der beim Normalbetrieb des Motors an der Stirnseite des Läuferblechpakets 12 anliegt.

Dem Bremstopf 14 mit dem Magnetanker 15 ist einer Bremsscheibe 16 zugeordnet, die im Lagerschild 17 gehalten und mittels Stifte 18 geführt und gegen Verdrehung gesichert ist. Die Bremsscheibe 16 ist nach Art eines Bajonettverschlusses im Lagerschild 17 montiert, axial verschiebbar und mit einem Bremsbelag oder mehreren Bremsbelägen 19 versehen. Die Bremsbeläge können gegebenenfalls auch am Bremstopf angebracht sein. Aus Unwuchtgründen ist es jedoch meist zweckmäßiger, die Bremsbeläge an der feststehenden Bremsscheibe zu befestigen. Um ein Blockieren der Bremse zu vermeiden, sind der Bremsscheibe 16 Federn 20 zugeordnet, deren andere Enden sich am Boden von im Lagerschild 17 angebrachten Bohrungen 21 abstützen und welche ein Nachgeben der Bremsscheibe in axialer Richtung ermöglichen. Der Verschiebeweg der Bremsscheibe 16 ist durch einen auf der Motorwelle 22 angebrachten Anschlagring 23 begrenzt. Die Motorwelle 22 ist im bremsseitigen Lagerschild 17 mittels eines Kugellagers 24 drehbar gelagert.

Außer dem Magnetanker 15 ist am Bremstopf 14 eine Keilscheibe 25 angebracht, die mit den Schrägflächen 26' im Kurzschlußring 26 des Läufers 12 in bekannter Weise zusammenwirkt.

Der Bremstopf 14 mit dem Magnetanker 15 und der Keilscheibe 25 ist dem Konturenverlauf des Wickelkopfes 27 der Statorwicklung angepaßt. Der bremsseitige Lagerschild 17 ist in üblicher Weise in das Motorgehäuse 28 eingepaßt und mit diesem vereinigt.

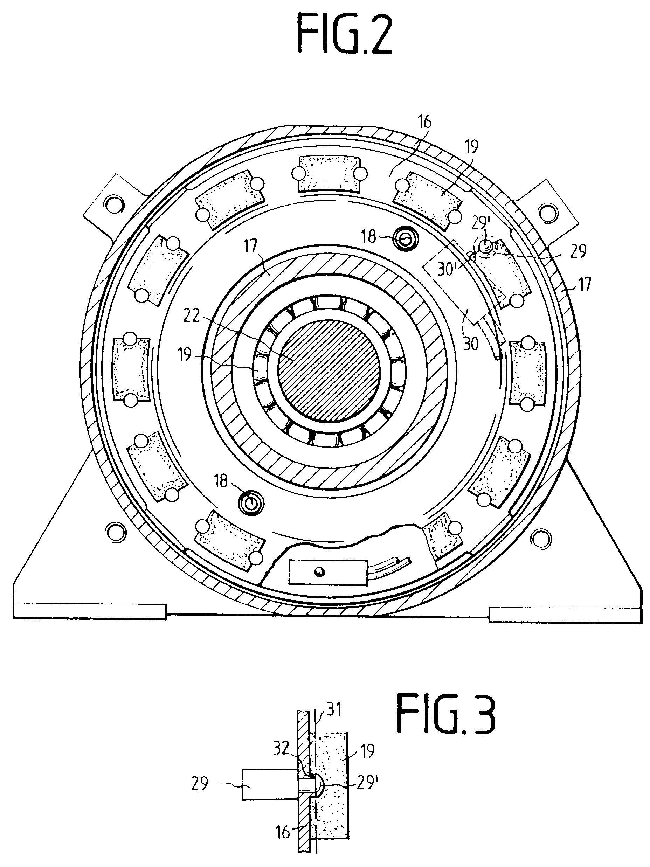

An der Bremsscheibe 16 ist ein als Schnappschalter ausgebildeter Schalter 30 angebracht, dessen Stößel 30' unter Federdruck steht. Gegebenenfalls kann der Schalter 30 auch an einem Vorsprung des Lagerschilds 17 angeordnet sein. Dem Stößel 30' des Schalters 30 ist ein Betätigungsglied 29 zugeordnet, das in der Bremsscheibe 16 befestigt ist. Das Betätigungsglied 29 ist beim Ausführungsbeispiel als Niet ausgebildet, dessen Kopf 29' bis an die Verschleißgrenze 31 des Bremsbelags 19 in diesen hineinragt. (Siehe hierzu Fig 3)

Beim Erreichen der Verschleißgrenze 31 wird der Kopf 29' des Niets fortlaufend abgeschliffen, bis sich der Niet aufgrund des durch den federbelasteten Stößel 30' des Schalters 30 auf ihn ausgeübten Drehmoments von der Bremsscheibe 16 löst und abfällt. Der unter Federwirkung stehende Stößel 30' des Schalters 30 kann nunmehr eine Aufwärtsbewegung ausführen, wodurch der Schalter 30 einen nicht dargestellten Stromkreis für einen optischen und/oder akustischen Signalgeber schließt. Zugleich kann der Schalter 30 auch den Steuerstromkreis für das ein den Motorschalter auslösendes Ralais schließen, so daß der Motor abgeschaltet wird.

Der Schalter 30 kann des weiteren auch dazu benutzt werden, ein Wiedereinschalten des Motors während des Bremsvorgangs zu verhindern.

Aus Figur 2 ist insbesondere auch die Anordnung der ein Verdrehen der abgefederten Bremsscheibe 16 verhindernden Stifte 18 ersichtlich.

Figur 3 zeigt die Befestigung des als Niet ausgebildeten Betätigungsglieds 29 an der Bremsscheibe 16, wobei die Anlageebene 32 des Nietkopfs 29' bündig mit der Verschleißgrenze 31 des Bremsbelags 19 abschließt.

Es besteht grundsätzlich auch die Möglichkeit, einen berührungslos arbeitenden Schalter für die Verschleißanzeige zu benutzen.

## Patentansprüche

1.  Elektromotor mit beim Abschalten des Motors selbsttätig wirkender Bremse, welche einen ferromagnetischen, die Motorwelle zwischen Läuferblechpaket und Lagerschild umgebenden, vom in den Läufer eindringenden magnetischen Fluß des Motors axial entgegen einer Federkraft an den Läufer anziehbaren Anker aufweist, wobei der Anker unmittelbar an einem axial auf der Welle geführten, mit dem Läufer drehbaren Bremselement befestigt ist, welches gegen eine unverdrehbare, gegen eine Rückstellkraft axial relativ zum bremsseitigen Lagerschild verschiebbare Bremsscheibe preßbar ist, und wobei das drehbare Bremselement um einen durch Anschläge begrenzten Drehwinkel gegenüber dem Läufer drehbar ist und zur Drehebene geneigte erste Keilflächen aufweist, welche beim Eingriff der Bremse an zugeordneten geneigten zweiten Keilflächen des Läufers anliegen, durch welche Flächen die Anschläge gebildet sind, dadurch gekennzeichnet, daß in der Bremsscheibe (16) ein mit einem bis an die Verschleißgrenze (31) des Bremsbelags (19) ragenden Abschleifkopf (29') versehenes Betätigungsglied (29) gehalten ist, auf das der unter Federwirkung stehende Stößel (30') eines Schalters (30) einwirkt, und das sich beim Erreichen der Verschleißgrenze (31) infolge Abtriebs des Abschleifkopfs (29') durch das durch den Schaltstößel (30') auf das Betätigungsglied (29) ausgeübte Drehmoment selbsttätig von der Bremsscheibe (16) löst, wodurch der Schalter (30) einen Stromkreis für eine Signalgabe und/oder für die Motorabschaltung schließt.

2.  Elektromotor nach Anspruch 1, dadurch gekennzeichnet, daß das Betätigungsglied (29) als Niet ausgebildet ist, dessen Kopf (29') in die Verschleißzone des Bremsbelags (19) hineinragt.

3.  Elektromotor nach Anspruch 1 oder 2, dadurch gekennzeichnet, daß der Schalter (30) als Schnappschalter ausgebildet ist.

4.  Elektromotor nach Anspruch 3, dadurch gekennzeichnet, daß der Schalter (30) an der Bremsscheibe (16) angebracht ist.

# FIG.1

# FIG.2

# FIG.3

Europäisches
Patentamt

**EUROPÄISCHER RECHERCHENBERICHT**

Nummer der Anmeldung

## EINSCHLÄGIGE DOKUMENTE

EP 92102036.8

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DE - A - 3 407 731 (LICENTIA) <br> * Zusammenfassung; Seite 5, Zeilen 3-21; Seite 7, Zeile 24 - Seite 9, Zeile 10; Fig. 1-4 * <br> -- | 1 | H 02 K 7/102 <br> H 02 K 7/12 <br> H 02 P 3/04 <br> F 16 D 66/02 |
| A | DE - A - 3 825 114 (LICENTIA) <br> * Spalte 2, Zeile 34 - Spalte 3, Zeile 12; Fig. * <br> -- | 1 | |
| A | EP - A - 0 360 779 (AUSTRIA ANTRIEBSTECHNIK) <br> * Spalte 2, Zeilen 23-63; Fig. 1-4 * <br> -- | 1 | |
| A | DE - C - 3 002 270 (FORD) <br> * Anspruch 1 * <br> -- | 1 | |
| A | DE - B - 2 224 693 (GIRLING) <br> * Anspruch 1 * <br> ---- | 1 | |

**RECHERCHIERTE SACHGEBIETE (Int Cl⁵)**

H 02 K
H 02 P
F 16 D

Der vorliegende Recherchenbericht wurde für alle Patentansprüche erstellt.

| Recherchenort | Abschlußdatum der Recherche | Prüfer |
|---|---|---|
| WIEN | 06-07-1992 | HAJOS |